# EUROPÄISCHE PATENTANMELDUNG

(11) **EP 1 640 296 A1**
(43) Veröffentlichungstag der Anmeldung: **29.03.2006**
(21) Anmeldenummer: 05021196.0
(22) Anmeldetag: 28.09.2005
(51) Int. Cl.: B65G 65/46, B65G 65/42, B65D 88/68

(54) **Vorrichtung zur Förderung von Schüttgut und zur Verhinderung von Brückenbildung**

(30) Priorität: 28.09.2004 DE 102004046993
(71) Anmelder: SHW Storage & Handling Solutions GmbH, 73433 Aalen-Wasseralfingen (DE)
(72) Erfinder: Schröder, Klaus-Sweerich, 73431 Aalen (DE); Quitte, Jens, 73433 Aalen (DE); Timmermann, Stephan Dr., 73430 Aalen (DE)
(74) Vertreter: Wess, Wolfgang

(57) **Zusammenfassung**

Vorrichtung zur Förderung von Schüttgut, umfassend:
e) eine Basis mit einer Lagereinrichtung für eine Drehlagerung um eine Umlaufachse (U),
f) eine von der Basis auskragende Fördereinrichtung (5), die wenigstens einen Querförderer (5) für eine Förderung des Schüttguts quer zu der Umlaufachse (U) oder wenigstens einen Zuförderer für eine Zuführung des Schüttguts zu einem derartigen Querförderer bildet,
g) ein Dach (4) für die Basis und die Fördereinrichtung (5), das um die Umlaufachse (U) drehbar mit der Basis verbunden ist,
h) und einen Antrieb, mit dem das Dach (4) relativ zu der Basis drehantreibbar ist.
Bei einem Drehantrieb des Dachs wird ein Reaktionsmoment auf die Basis übertragen um ihre Rotation zu helfen.
Das Dach hat zusätzlich Effektorelemente zur Verhinderung der Bildung von Brücken; z.B. Spiralen, Reißzähne oder Messer.

## Beschreibung

Die Erfindung betrifft eine Vorrichtung zur Förderung von Schüttgut, das in Form einer Schüttgutsäule auf der Vorrichtung lastet. Die Vorrichtung ist insbesondere für den Einsatz in großen Silos geeignet, um das Schüttgut aus dem Silo auszutragen. Die Erfindung betrifft des weiteren ein Schüttgutlager mit der Vorrichtung und auch ein Verfahren zur Förderung von Schüttgut, bei dem die Vorrichtung verwendet wird.

Bei Silos mit großen Volumina werden üblicherweise Umlaufschnecken als Austragorgane eingesetzt. Die Umlaufschnecke ist in der Mitte des Silos in einem drehbaren Turm gelagert und kann eine freitragende oder abgestützte Förderschnecke sein. Die Förderschnecke wird durch ein angeflanschtes Getriebe oder mittels Kettentrieb angetrieben und fördert das Schüttgut durch den Turm aus dem Silo. Um den gesamten Siloboden zu aktivieren, wird der Turm in eine langsame Rotationsbewegung versetzt, so dass die Förderschnecke sich langsam um die vertikale Silomittelachse dreht. Mit Reißzähnen ausgerüstet gräbt sie sich durch das Schüttgut vor. Bei großen Silohöhen und großen Silodurchmessern und entsprechend hoher sowie breiter Schüttgutsäule steigt der Druck, der durch das Schüttgut auf den Turm der Förderschnecke ausgeübt wird, enorm an. Um das Antriebsmoment für die Drehung des Turms zu minimieren, wird der Deckel bzw. das Dach des Turms drehbar auf einer Basis des Turms gelagert. Beim Betrieb der Förderschnecke dreht die Turmbasis langsam unter dem Dach weg, während das Dach durch die Schüttgutreibung gehalten wird. Mit zunehmender Füllhöhe steigt das Risiko einer stabilen Schüttgutbrücke. Das nicht rotierende Dach bildet hierbei einen idealen Brückenfuß. Die Gefahr einer stabilen Schüttgutbrücke von der senkrechten Silowand zum Dach des Schneckenturms besteht auch bei kegelförmigen Dächern und Dächern in Form von Klöpperböden. Um die Gefahr der Brückenfußbildung zu verringern, kann das Dach fest mit der Turmbasis der Förderschnecke verbunden werden. Aus der festen Verbindung resultiert allerdings aufgrund der Reibung zwischen Dach und Schüttgut und dem Flächenverhältnis von Dach zur Mantelfläche der Turmbasis ein Drehmoment, das im Vergleich zu frei drehbar gelagerten Dächern um etwa 50 % erhöht ist.

Es ist eine Aufgabe der Erfindung, bei einer Vorrichtung der genannten Art der Bildung eines stabilen Brückenfußes entgegen zu wirken und dennoch das für den Antrieb der Umlaufbewegung erforderliche Antriebsmoment gering zu halten.

Die Erfindung geht von einer Vorrichtung zur Förderung von Schüttgut aus, die eine Basis mit einer Lagereinrichtung für eine Drehlagerung der Vorrichtung um eine Umlaufachse, eine von der Basis auskragende Fördereinrichtung für eine Förderung des Schüttguts und ein Dach aufweist, das um die Umlaufachse oder eine zu der Umlaufachse zumindest im Wesentlichen parallel versetzte Achse drehbar mit der Basis verbunden ist. Die Lagereinrichtung kann ein komplettes Drehlager oder eine Komponente eines Drehlagers bilden, beispielsweise eine Wälzbahn oder eine Gleitbahn um die Umlaufachse. Die Fördereinrichtung ist an der Basis abgestützt, so dass sie bei einem Drehantrieb der Basis um die Umlaufachse schwenkt und in diesem Sinne um die Umlaufachse umläuft. Sie kragt vorzugsweise freitragend aus, kann stattdessen aber auch abgestützt sein, beispielsweise an einer umlaufenden Führung an einer Wand eines Lagerbehälters oder mittels einer ebenfalls von der Basis abragenden Stützeinrichtung. Die Basis bildet die Lagerplattform für die Fördereinrichtung und kann vorteilhafterweise wie bei den bekannten Vorrichtungen in Turmbauweise mit einem Mantel ausgeführt sein. Ein derartiger Mantel kann grundsätzlich sogar bereits die Basis bilden. Das Dach sollte zumindest den Teil der Basis überdecken, von dem die Fördereinrichtung auskragt, um die Lagerstelle oder mehreren Lagerstellen der Fördereinrichtung und einen vorzugsweise auf der Basis gelagerten Antrieb für die Fördereinrichtung von einer im Betrieb der Vorrichtung auf dem Dach lastenden Schüttgutsäule abzuschirmen. Eine von dem Dach gebildete Dachfläche ist deshalb zumindest über der Lagerung der Fördereinrichtung so dicht, dass kein Schüttgut auf die Lagerung fallen kann. Vorzugsweise ist die Dachfläche eine geschlossene Fläche ohne Durchbrechungen.

Die Fördereinrichtung kann insbesondere eine Förderschnecke sein. Alternativ oder zusätzlich zu einer Förderschnecke kann die Fördereinrichtung als Umlauffräse gebildet sein, insbesondere als Förderkette, die um ein Stütz- und Führungsmittel umläuft, vergleichbar einer überdimensionalen Motorkettensäge. In noch einer Alternative ist eine mit der Basis umlaufende Komponente der Fördereinrichtung selbst kein Querförderer, d. h. kein Förderorgan, das das Schüttgut quer zu der Umlaufachse fördert, sondern ein Zuförderer, der das Schüttgut zu einem nicht umlaufenden, ortsfest installierten Querförderer fördert. Der Zuförderer kann ein vorzugsweise mit Aufreißern versehener Schlepparm sein, der im Falle eines Drehantriebs wie ein Rührarm wirkt. Den ortsfesten Querförderer kann beispielsweise eine Förderschnecke oder Förderkette bilden. Obgleich als Fördereinrichtung, zumindest im Falle des mit der Basis umlaufenden Querförderers, ein einziges Förderorgan bevorzugt wird, kann die Fördereinrichtung grundsätzlich auch aus mehreren um die Umlaufachse verteilt angeordneten, von der Basis auskragenden Förderorganen, beispielsweise Förderschnecken, bestehen.

Nach der Erfindung umfasst die Vorrichtung einen Antrieb, mit dem das Dach relativ zu der Basis um die Umlaufachse drehantreibbar ist. Das bei einem Drehantrieb des Dachs auftretende Reaktionsmoment wird vorteilhafterweise von der Basis aufgenommen, indem der Antrieb die Basis und das Dach bevorzugt kinematisch miteinander koppelt. Die Drehzahl des einen aus Dach und Basis ergibt sich bei kinematischer Kopplung eindeutig aus der Drehzahl des anderen. Die Kopplung überträgt das Reaktionsmoment vorzugsweise formschlüssig, d.h. schlupffrei. Sollte in der Kopplung ein Schlupf auftreten, so sollte er so klein sein, dass er für die praktischen Belange vernachlässigt werden kann, was bei einer kinematischen Kopplung von Hause aus der Fall ist. Vorzugsweise wird das Reaktionsmoment für einen Drehantrieb der Basis in die Gegendrehrichtung genutzt. Besonders vorteilhaft ist, wenn ein Motor des Antriebs an der Basis abgestützt ist, beispielsweise indem er mit der Basis um die Umlaufachse rotiert, gegebenenfalls in der Drehzahl über- oder untersetzt. Alternativ kann der Motor sich an dem Dach abstützen und mit diesem drehen, gegebenenfalls in der Drehzahl über- oder untersetzt. Grundsätzlich ist es auch möglich, dass der Motor an einem die Basis drehbar lagernden Gestell abgestützt ist und der Antrieb sich verzweigt mit einem Antriebszweig zur Basis und einem weiteren Antriebszweig zum Dach.

Vorzugsweise ist für den Drehantrieb der Basis ein weiterer Antrieb vorgesehen. Ein Motor des weiteren Antriebs ist vorzugsweise an der Basis abgestützt und dreht sich mit dieser um die Umlaufachse, gegebenenfalls in der Drehzahl über- oder untersetzt. Der Motor des weiteren Antriebs kann alternativ aber auch an einem Gestell abgestützt sein, relativ zu dem die Basis sich bei ihrem Drehantrieb um die Umlaufachse dreht.

Durch den Einsatz von wenigstens zwei Antrieben, nämlich ein Antrieb für das Dach und ein weiterer Antrieb für die Basis, kann das Einsatzspektrum der Vorrichtung hin zu größeren Lagerbehältern, insbesondere Silos, und/oder schwereren Schüttgütern erweitert werden. Im Hinblick auf die bevorzugte Ausführung, in der die Basis das Reaktionsmoment für den Drehantrieb des Dachs aufnimmt, ist unabhängig von der Anzahl der Motoren bereits vorteilhaft, dass das Reaktionsmoment gleichzeitig auch Antriebsdrehmoment für die Basis ist und nicht verloren geht. Mit zunehmender Höhe der Schüttgutsäule und der damit einhergehend höheren Reibung zwischen dem Schüttgut und dem Dach nimmt nur das Reaktionsmoment zu. Im Ergebnis verringert sich der Drehmomentbedarf der Umlaufbewegung, da die Überwindung der Dachreibung, d.h. der Reibung zwischen dem Dach und dem darauf lastenden Schüttgut, zum Antrieb der Umlaufbewegung der Fördereinrichtung genutzt wird. Bei niedrigen Füllständen und dementsprechend geringem Drehmomentbedarf für den Antrieb des Dachs wird andererseits auch ein geringes Reaktionsmoment auf der Seite des Basis erzeugt, so dass der Dachantrieb entsprechend weniger Leistung aufnimmt und einem geringeren Verschleiß unterliegt, was im weiteren auch für die Lager und die Fördereinrichtung gilt.

Durch die Erfindung kann auch eine gleichmäßigere Förderrate während des Abtrags einer Schüttgutsäule erzielt werden. Erzeugt der Antrieb über die Abtragsdauer ein konstantes Drehmoment, wie dies üblich ist, so nimmt die Umlaufgeschwindigkeit der Fördereinrichtung zu, wenn die Höhe der Schüttgutsäule abnimmt. Die Füllung der Fördereinrichtung nimmt entsprechend zu. Wird das gleiche Antriebsmoment jedoch im Sinne der Erfindung verteilt über den Antrieb für die Basis und den Antrieb für das Dach aufgebracht, so dreht mit abnehmender Säulenhöhe das Dach schneller, weil das abnehmende Gewicht der Schüttgutsäule vor allem auf dem Dach lastet. Die Gleitreibung zwischen dem Dach und dem Schüttgut und infolgedessen auch das vom Dach auf die Basis übertragene Drehmoment nehmen ab. Die Rotationsgeschwindigkeit der Basis nimmt in erster Linie nur in dem Maße zu wie die zwischen dem Schüttgut und der Basis wirkende Gleitreibung und das auf die Fördereinrichtung wirkende Gewicht des Schüttguts abnehmen. Die Beschleunigung aufgrund abnehmender Säulenhöhe wird gegenüber herkömmlichen Vorrichtungen im Ergebnis um den Anteil vermindert, der von der abnehmenden Gleitreibung zwischen Dach und Schüttgut herrührt. Wegen der gleichmäßigeren Förderrate wird das Schüttgut schonender gefördert. Um Motorleistung zu sparen, kann der Sollwert für das Drehmoment des Dachantriebs während des Abtrags gesenkt werden, gesteuert oder geregelt. Im Falle einer Aufteilung der Antriebsleistung auf mehrere Motoren kann einer der Motoren oder können sukzessive mehrere Motoren ausgekuppelt werden.

Indem das Dach relativ zu der Basis drehantreibbar ist, kann mit geringem Drehmomentbedarf für die Drehbewegung des Dachs die Brückenfußbildung im Bereich des Dachs nicht nur verhindert oder zumindest behindert, sondern das Dach kann zusätzlich auch noch zu einem aktiven Brückenfußzerstörer weiterentwickelt werden. In derartigen Weiterentwicklungen ist auf dem Dach eine Effektoreinrichtung angeordnet, die von dem Schüttgut gebildete Brücken zerstört. Die Effektoreinrichtung besteht aus wenigstens einem Effektorelement, das von dem Dach parallel zu der Umlaufachse oder wenigstens mit einer Richtungskomponente parallel zur Umlaufachse abragt. Das wenigstens eine Effektorelement ragt von einer Außenfläche des Dachs in das Schüttgut und ist so geformt, dass es bei sich drehendem Dach im Weg seiner Umlaufbewegung befindliche Schüttgutbrücken bricht, zerschneidet, aufreißt oder sonstwie zerstört.

Das wenigstens eine Effektorelement kann ein passives oder ein aktives Element sein. Als aktives Element wird es relativ zu dem Dach angetrieben und kann insbesondere als rotierendes Schneid- oder Reißelement gebildet sein, beispielsweise als rotierende Schnecke oder Sichel oder als verschiebbarer Aufreißer oder verschiebbares Messer. Ein Reißzahn bildet ein vorteilhaftes Beispiel für ein passives Effektorelement. Vorzugsweise bildet eine vom Dach abragende Spirale das wenigstens eine passive Effektorelement. Die Spirale kann insbesondere von einem um die Umlaufachse spiralig umlaufenden, schmalen Steg gebildet werden. Die Spirale sollte sich über wenigstens 180°, vorzugsweise über wenigstens 270°, um die Umlaufachse erstrecken. Andererseits sollte der Erstreckungswinkel nicht mehr als 630° betragen. Der Spiralsteg bildet eine derartig erstreckte Spirale vorzugsweise als durchgehender Steg, grundsätzlich kann der Steg jedoch stellenweise auch durchbrochen sein. Das äußere Ende des Spiralstegs ist vorzugsweise am äußeren Dachrand oder zumindest in der Nähe des äußeren Dachrands gebildet. Der Spiralsteg sollte sich mit seinem inneren Ende bis zu der Umlaufachse erstrecken.

Durch die Spiralform werden Schüttgutbrücken auseinander gerissen, indem es in dem von der umlaufenden Spirale kontaktierten Schüttgut zu Verlagerungen kommt. Der Steg sollte zur Drehrichtung des Dachs überall eine Neigung haben, die kleiner als 40° ist, vorzugsweise höchstens 30° beträgt. Abschnittsweise kann die Neigung sogar 0° sein, d.h. der Steg bildet in diesen Abschnitten einen Kreisbogenabschnitt um die Umlaufachse. Der Steg kann abschnittweise auch gerade sein. Bevorzugt ist der Steg jedoch im mathematischen Sinne eine Spirale, d.h. er ist überall gekrümmt, wobei sein auf die Umlaufachse gemessener Krümmungsradius zwischen seinem äußeren Ende und seinem inneren Ende kontinuierlich abnimmt.

In alternativen Ausführungsformen können mehrere passive Effektorelemente oder mehrere aktive Effektorelemente oder auch ein oder mehrere passive und ein oder mehrere aktive Effektorelemente in Kombination die Effektoreinrichtung bilden.

Bei Verwendung des Dachs als Brückenfußzerstörer kann die Höhe der auf dem Dach lastenden Schüttgutsäule nochmals vergrößert werden, da Schüttgutbrücken sicher zerstört werden.

Der Antrieb für das Dach umfasst einen Motor und ein Getriebe, dass die Antriebsbewegung des Motors auf das Dach überträgt. Das Getriebe ist vorzugsweise ein formschlüssig übertragendes Getriebe, bevorzugt ein Zahnradgetriebe, kann grundsätzlich aber auch ein Zugmittelgetriebe, eine Kombination aus Zahnrad und Zugmittelgetriebe oder sogar ein Reibradgetriebe sein oder enthalten. Bevorzugt umfasst das Getriebe ein Antriebsrad und einen Abtriebsring, an dem das Antriebsrad innen abwälzt. Der Motor treibt das Antriebsrad vorzugsweise über ein Untersetzungsgetriebe an. Das Untersetzungsgetriebe ist bevorzugt ein Umlaufgetriebe bzw. Planetengetriebe. Der Abtriebsring ist vorzugsweise drehsteif mit dem Dach verbunden. Der Motor ist an der Basis abgestützt, so dass er mit dieser rotiert. In Umkehrung dieser Anordnung kann der Abtriebsring auch drehsteif mit der Basis und der Motor drehsteif mit dem Dach verbunden sein. Anstatt über ein innenachsiges Getrieberadpaar kann der Motor das Dach auch über ein außenachsiges Getrieberadpaar antreiben, d.h. über ein Antriebsrad, dass an einem Abtriebsring oder einer Abtriebsscheibe außen abwälzt. Zur Vergrößerung des Drehmoments für Verwendungen im Zusammenhang mit schweren Schüttgütern und/oder hohen Schüttgutsäulen kann es vorteilhaft sein, über den Umfang des Abtriebsrads verteilt zwei oder noch mehr derartige Antriebe vorzusehen.

In einer bevorzugten Ausführung ist das Dach über das Abtriebsrad an der Basis abgestützt. Das Abtriebsrad kann eine Komponente eines das Dach relativ zu der Basis drehbar lagernden Drehlagers bilden, beispielsweise eine Gleitbahn oder vorzugsweise eine Wälzbahn des Drehlagers. Das Drehlager ist vorzugsweise ein Axial-Radiallager um die Umlaufachse. Das Abtriebsrad kann vorteilhafterweise einen Lagerring für Wälzkörper des Drehlagers bilden.

Das vorstehend zu dem Antrieb des Dachs Gesagte gilt vorteilhafterweise sinngemäß auch für den weiteren Antrieb, der die Drehbewegung der Basis vorzugsweise primär bewirkt. Der oder die Motoren des weiteren Antriebs ist oder sind an der Basis oder einem die Basis drehbar lagernden Gestell abgestützt. In einer bevorzugten Ausführung ist die Basis über ein Abtriebsrad des weiteren Antriebs an dem Gestell abgestützt. Das Abtriebsrad des weiteren Antriebs kann eine Komponente eines die Basis relativ zu dem Gestell drehbar lagernden Drehlagers bilden, beispielsweise eine Gleitbahn oder vorzugsweise eine Wälzbahn des Drehlagers. Das Drehlager ist vorzugsweise ein Axial-Radiallager um die Umlaufachse. Das Abtriebsrad kann vorteilhafterweise einen Lagerring für Wälzkörper des Drehlagers bilden.

Über die Vorrichtung als solche hinaus ist Gegenstand der Erfindung auch ein Verfahren für die Förderung von Schüttgut, bei dem das Dach drehangetrieben und vorzugsweise als Brückenzerstörer eingesetzt wird. Durch das Verfahren wird mittels der Vorrichtung aus einem Lagerbehälter das Schüttgut vorzugsweise ausgetragen.

Schließlich betrifft die Erfindung auch ein Schüttgutlager mit einem Lagerbehälter und der in einem Zentrum des Lagerbehälters angeordneten Vorrichtung. Der Lagerbehälter ist vorzugsweise ein zumindest im Inneren kreisrundes Silo. Die Fördereinrichtung kragt vorzugsweise bis an die Mantelinnenfläche des Silos aus, so dass der gesamte Boden des Silos um die drehende Basis herum von der Fördereinrichtung erreicht wird.

Bevorzugte Merkmale der Erfindung werden auch in den Unteransprüchen und durch deren Kombinationen beschrieben.

Ausführungsbeispiele der Erfindung werden nachfolgend anhand von Figuren erläutert. An den Ausführungsbeispielen offenbar werdende Merkmale bilden je einzeln und in jeder Merkmalskombination die Gegenstände der Ansprüche und auch die vorstehend beschriebenen Ausgestaltungen vorteilhaft weiter. Es zeigen:
- Fig.1: ein Schüttgutlager mit einem Lagerbehälter, von dessen Behälterwand ein Abschnitt dargestellt ist, und mit einer im Zentrum des Lagerbehälters angeordneten Vorrichtung zur Förderung des Schüttguts,
- Fig. 2: die Vorrichtung zur Förderung des Schüttguts in einer ersten Variante,
- Fig. 3: einen Teil der Vorrichtung in einer zweiten Variante in einer perspektivischen Sicht,
- Fig. 4: die Vorrichtung der zweiten Variante in einer Seitenansicht und
- Fig. 5: die Vorrichtung der zweiten Variante in einer Draufsicht auf ein Dach der Vorrichtung.

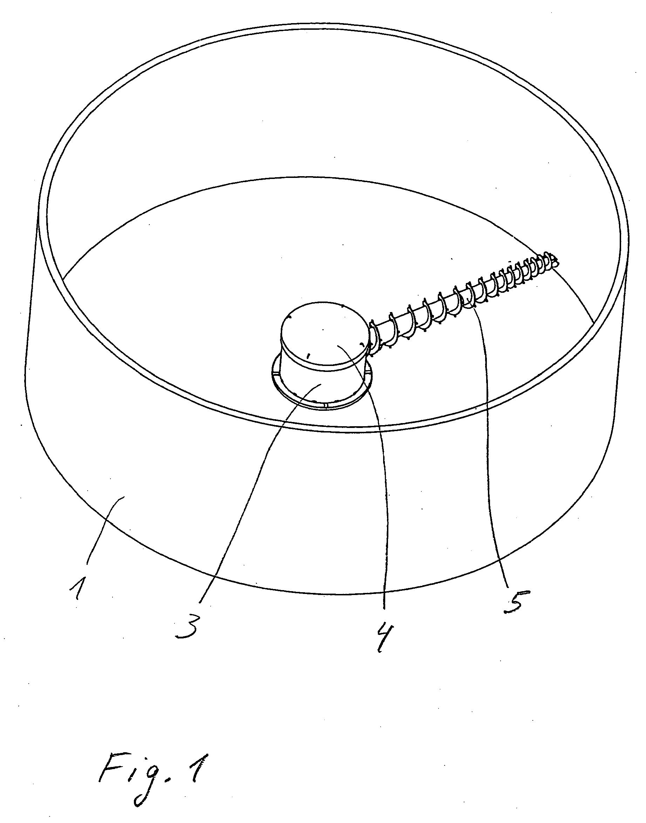

Fig. 1 zeigt einen Blick in ein Schüttgutlager. Das Schüttgutlager umfasst einen Lagerbehälter, der im Ausführungsbeispiel als Silo mit einer kreisrunden Seitenwand 1 gebildet ist. Von der Seitenwand 1 ist allerdings nur ein Ringabschnitt dargestellt. An einem Boden des Lagerbehälters 1 ist in dessen Zentrum eine Vorrichtung zur Förderung von Schüttgut angeordnet. Die Vorrichtung umfasst eine Fördereinrichtung 5, im Ausführungsbeispiel eine Förderschnecke 5, und ferner einen Turm, den eine in der Figur nicht erkennbare Basis, ein drehsteif mit der Basis verbundener Mantel 3 und ein Dach 4 in Form eines zumindest im wesentlichen geschlossenen Gehäuses bilden. Die Basis ist auf einem Gestell des Schüttgutlagers um eine vertikale Umlaufachse U drehbar gelagert. Bei einer Drehbewegung des Turms 3, 4 schwenkt die Förderschnecke 5 um die Umlaufachse U und überstreicht dabei die gesamte zwischen dem Turm 3, 4 und dem Lagerbehälter 1 erstreckte Bodenfläche des Lagerbehälters 1. Die Förderschnecke 5 ist an der Basis abgestützt und um ihre quer, im Ausführungsbeispiel radial zur Umlaufachse U weisende Längsachse drehbar gelagert. Um ihre Längsachse wird sie drehangetrieben. Bei einem Drehantrieb der Förderschnecke 5 wird das Schüttgut in den Gewindegängen der Förderschneck 5 nach radial einwärts in den Turm 3, 4 und durch einen Boden des Lagerbehälters 1 aus dem Turm 3, 4 abgefördert, d.h. ausgetragen. Die Förderschnecke 5 ist am Außenumfang ihrer Schneckenwindungen mit Reißzähnen versehen, mit denen sie sich bei dem Drehantrieb um ihre Längsachse und dem Drehantrieb um die Umlaufachse U in Umlaufrichtung durch das Schüttgut gräbt.

Fig. 2 zeigt die Fördervorrichtung in einer ersten Variante, die für den Einbau in den Lagerbehälter 1 vorbereitet ist. Der Turm 3, 4 bildet mit seinem Mantel 3 und seinem Dach 4 ein Schutzgehäuse für die Lager der Vorrichtung, insbesondere für das Lager, der Förderschnecke 5, und Antriebe der Vorrichtung. Die Förderschnecke 5 kragt durch eine Öffnung im Mantel 3 aus dem Turm 3, 4 frei aus. Ein außenverzahntes Abtriebsrad 9 ist an einem Gestell 16 des Lagerbehälters 1 konzentrisch zu der Umlaufachse U drehsteif befestigt und somit nach Montage der Vorrichtung in einem Lagerbehälter 1 ortsfest unbeweglich angeordnet. Dargestellt ist ferner ein Teil 17, das drehsteif mit der Basis 2 verbunden und so gemeinsam mit der gesamten Fördervorrichtung um die Umlaufachse U drehbar gelagert ist. An dem Teil 17 sind parallel zur Umlaufachse U nach unten kragend zwei Elektromotoren 6 befestigt. Die Motoren 6 treiben je über ein zugeordnetes mehrstufiges Planetengetriebe 7 mit einer Untersetzung von etwa 1:4000 ein zugeordnetes außenverzahntes Stirnrad 8 an. Die beiden Planetengetriebe 7 sind an die Gehäuse der Motoren 6 angeflanscht. Die Wellen der Motoren 6 und die Drehachsen der Antriebsräder 8 und des Abtriebsrads 9 sind zu der Umlaufachse U koaxial. Die Antriebsräder 8 kämmen jeweils mit dem gemeinsamen Abtriebrad 9.

Mit 18 ist ein Schleifringkörper bezeichnet, über den die bei einem Drehantrieb um die Umlaufachse U umlaufenden Motoren 6 mit elektrischer Energie versorgt werden. Die Elektromotoren 6 könnten durch Hydraulikmotoren ersetzt werden.

Das Dach 4 ist relativ zu der Basis 2 und dem Mantel 3 drehbar um die Umlaufachse U gelagert, jedoch nicht frei drehbar, sondern über eine kinematische Kopplung mit dem Mantel 3, der wiederum mit der Basis drehsteif verbunden ist. Die kinematische Kopplung wird im Unterschied zu dem außenachsigen Getriebe 8, 9 von einem innenachsigen Zahnradgetriebe gebildet, dass aus wenigstens einem außenverzahnten Antriebrad ähnlich den Antriebrädern 8 und einem innenverzahnten Abtriebsrad, d.h. einem Abtriebsring, gebildet wird. Der Drehantrieb für das Dach 4 umfasst außer diesem Zahnradpaar wenigstens einen Motor, der bei Ausbildung der Motoren 6 als Elektromotoren vorzugsweise ebenfalls ein Elektromotor und bei Ausbildung der Motoren 6 als Hydraulikmotoren vorzugsweise ebenfalls ein Hydraulikmotor ist, und ein Untersetzungsgetriebe, das wie die Untersetzungsgetriebe 7 gebildet ist. Der Motor für das Dach ist vorzugsweise an der Basis 2 abgestützt, beispielsweise über den Mantel 3. Alternativ könnte er an dem Dach 4 abgestützt sein, was jedoch eine Energieversorgung über einen zusätzlichen Schleifring erfordern würde. Das Abtriebsrad des Dachantriebs ist entsprechend mit der anderen Turmkomponente drehsteif verbunden. Mit dem derart gebildeten Antrieb ist das Dach 4 relativ zu dem Mantel 3 und letztlich zu der Basis um die Umlaufachse U drehantreibbar. Die Basis 2 nimmt das von dem Dach 4 bei einem Drehantrieb ausgeübte Reaktionsmoment auf, nämlich über die kinematische Kopplung, und wird deshalb von dem Dachantrieb in Gegendrehrichtung zum Dach 4 angetrieben, wenn auf dem Dach 4 eine Schüttgutsäule lastet und deshalb das Dach 4 bei seiner Drehbewegung in einem Gleitreibkontakt mit dem Schüttgut ist. Grundsätzlich könnte der Dachantrieb ausreichen, um die Drehbewegung der Basis 2 und des Mantels 3 und damit insbesondere die Umlaufbewegung der Förderschnecke 5 zu bewirken. Praktisch wird der durch den Gleitreibkontakt bewirkte Abstützeffekt des Dachs 4 jedoch in den meisten Anwendungsfällen nicht ausreichen, um die Förderschnecke 5 in Umlauf zu versetzen. Die Umlaufbewegung der Förderschnecke 5 bewirkt primär der Antrieb 6-9, der auf den Antrieb des Dachs 4 so abgestimmt ist, dass das vom Dachantrieb ausgeübte Reaktionsmoment und das Antriebsmoment des Antriebs 6-9 in die gleiche Richtung weisen, nämlich der Drehbewegung des Dachs 4 entgegen.

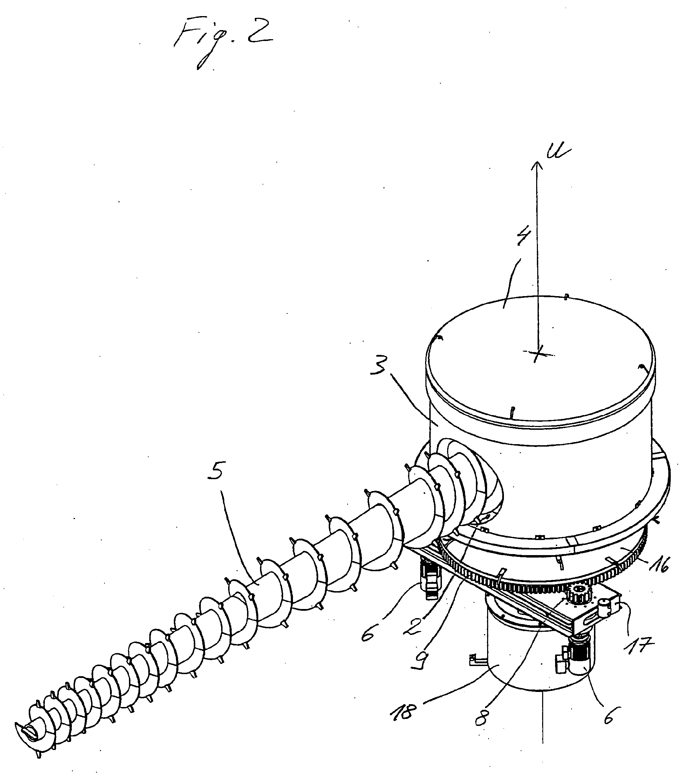

Fig. 3 zeigt den Turm einer Fördervorrichtung einer zweiten Variante ohne Förderschnecke 5, d.h. vor deren Montage. Der Mantel 3 ist nur teilweise dargestellt, so dass er den Blick in das Innere des Turms und auf dessen Basis 2 freigibt. Die Fördervorrichtung der zweiten Variante unterscheidet sich von der ersten Variante in Bezug auf die beiden Drehantriebe, nämlich den Antrieb für das Dach 4 und den weiteren Antrieb für die Basis 2. Das Dach 4 ist ferner zu einem Brückenbrecher weiterentwickelt, indem auf dem Dach 4 eine Effektoreinrichtung 15 befestigt ist, die bei einer Drehbewegung des Dachs 4 im Bereich des Dachs 4 vom Schüttgut gebildete Brückenfüße auseinander reißt und dadurch zerstört oder gar nicht erst entstehen lässt. Die Effektoreinrichtung 15 ist als ein einziger, um die Umlaufachse U geschlossen, d.h. durchbrechungsfrei, in Form einer Spirale umlaufender Steg 15 gebildet. Das Dach 4 weist eine von der Basis 2 nach außen vorgewölbte Oberfläche auf. Im Beispiel ist das Dach 4 als Klöpperboden gebildet. Anstatt eines rund gewölbten Dachs 4 kann der Turm 2-4 beispielsweise auch mit einem kegelförmigen Dach ausgestattet sein. Der die Effektoreinrichtung 15 bildende Steg 15 ragt von dem Dach 4 senkrecht ab und weist eine Höhe von einigen Zentimetern auf.

Der Antrieb für das Dach 4 besteht aus einem Elektromotor 11, einem angeflanschten Untersetzungsgetriebe 12, einem außenverzahnten Antriebstirnrad 13, das drehsteif auf einer Ausgangswelle des Untersetzungsgetriebes 12 sitzt, und einem Abtriebsrad 14, das mit dem Antriebsrad 13 kämmt. Die Motorwelle und die Drehachsen der Zahnräder 13 und 14 sind zu der Umlaufachse U koaxial. Das Abtriebsrad 14 ist als innenverzahnter Ring gebildet und drehsteif an dem Dach 4 befestigt. Das Dach 4 stützt sich über das Abtriebsrad 14 und im weiteren über den Mantel 3 und Zwischenwände des Turms 2-4 an der Basis 2 ab. Das Abtriebsrad 14 bildet einen inneren Lagerring mit einer Wälzbahn für Wälzkörper der Drehverbindung zwischen der Basis 2 und dem Dach 4. Die Drehverbindung ist vorzugsweise eine Kugeldrehverbindung, um ein Axial-Radiallager in Form eines einzigen Kugellagers integriert zu bilden. Der Motor 11 ist über den Mantel 3 oder einer Zwischenwand starr mit der Basis 2 verbunden.

Der weitere Antrieb, mit dem die Basis 2 zusätzlich drehangetrieben wird, umfasst einen einzigen Motor 6, ein Untersetzungsgetriebe 7, dessen Ausgangsrad ein Antriebsrad bildet, und ebenfalls ein innenverzahntes Abtriebsrad 10, das das außenverzahnte Abtriebsrad 9 der ersten Variante ersetzt. Der Motor 6, das Untersetzungsgetriebe 7 und das Antriebsrad können wie in der ersten Variante ausgebildet sein. Das Abtriebsrad 10 ist drehsteif mit einem Gestell 16 verbunden, über das der Turm 2-4 im Schüttgutlager ortsfest befestigt wird. Das Gestell 16 wird in einem Lagerbehälter vorzugsweise einbetoniert. Der Motor 6 ist mit der Basis 2 starr verbunden und dadurch für das Drehantreiben der Basis 2 abgestützt. Das Abtriebsrad 10 bildet einen inneren Lagerring mit einer Wälzbahn für Wälzkörper der Drehverbindung zwischen der Basis 2 und dem Gestell 16. Die Drehverbindung ist vorzugsweise eine Kugeldrehverbindung, um ein Axial-Radiallager in Form eines einzigen Kugellagers integriert zu bilden.

Das Abtriebsrad 10 stützt den gesamten Turm 2-4 auf dem Gestell 16 ab. Die beiden Drehverbindungen zwischen dem Dach 4 und der Basis 2 und zwischen der Basis 2 und dem Gestell 16 können im Sinne eines Baukastensystems gleich sein. In diesem Sinne sind vorzugsweise auch die integrierten Motorgetriebeeinheiten 6, 7 und 11, 12 gleich.

Fig. 4 zeigt die Fördervorrichtung der zweiten Variante in einem Längsschnitt, dessen Schnittebene die Umlaufachse U enthält. Innerhalb des Turms 2-4 hängt der Motor 11 von einer drehsteif mit dem Mantel 3 und/oder den Zwischenwänden verbundenen oberen Plattform in Richtung auf die Basis 2 ab, und der Motor 6 ragt von der Basis 2 als unterer Plattform auf das Dach 4 zu. Die drehsteif auf Ausgangswellen der Motorgetriebeeinheiten 6, 7 und 11, 12 sitzenden Antriebsräder sind mit 8 und 13 bezeichnet. Die beiden Zahnradpaare 8, 10 und 13, 14 sind vorteilhafterweise identisch, d.h. im Sinne eines Baukastensystems sollten untereinander zum einen die Antriebräder 8 und 13 und zum anderen die Abtriebsräder 10 und 14 gleich sein. Der Motor 11 und auch das nachgeordnete Getriebe 13, 14 sind stark genug ausgelegt, um bei maximaler Schüttguthöhe beim Anlaufen die Haftreibung und im Betrieb die Gleitreibung zwischen dem Schüttgut und dem Dach 4 zu überwinden. Der weitere Antrieb 6-10 ist so ausgelegt, dass er das zusätzlich noch aufzubringende Drehmoment für den Drehantrieb der Basis 2 und damit verbunden den Umlaufantrieb der Förderschnecke 5 aufbringen kann. Da der Antrieb 11-14 für das Dach 4 einen Teil des Drehmoments für die Umlaufbewegung liefert, kann der weitere Antrieb 6-10 schwächer als die Antriebe herkömmlicher Vorrichtungen ausgelegt sein. Falls besonders hohe Drehmomente aufzubringen sind, kann zu dem Motor 6 noch ein weiterer oder ggf. können mehrere weitere Motoren 6 das Antriebsrad 14 antreiben. Ebenso kann der Antrieb 11-14 mit einem und grundsätzlich sogar mit mehreren weiteren Motoren 11 ausgestattet sein, um das Dach 4 anzutreiben.

Auch für das Dach 4 ergibt sich eine Antriebsüberlagerung. Die Überlagerung muss nur so sein, dass das Dach 4 relativ zu dem Schüttgut, d.h. relativ zu dem Gestell der Vorrichtung eine Drehbewegung ausführt. Diese Drehbewegung kann eine Drehbewegung in Richtung der Drehbewegung der Basis 2 sein, allerdings gegenüber der Drehgeschwindigkeit der Basis 2 eine verzögerte Drehbewegung. Bevorzugt wird es allerdings, wenn das Dach 4 so angetrieben wird, dass es relativ zu dem Gestell 16 in die der Drehrichtung der Basis 2 und der Förderschnecke 5 entgegengerichtete Drehrichtung rotiert.

Die Motoren 6 und 11 werden im Betrieb von einer gemeinsamen oder je einer individuellen Motorsteuerung oder -regelung auf Einhaltung eines Sollwerts für das Motordrehmoment geregelt. Die vorgegebenen Sollwerte können die gleichen oder unterschiedlich sein. In bevorzugt einfacher Ausführung der Motorsteuerung oder - regelung werden die Sollwerte während des Betriebs nicht verändert.

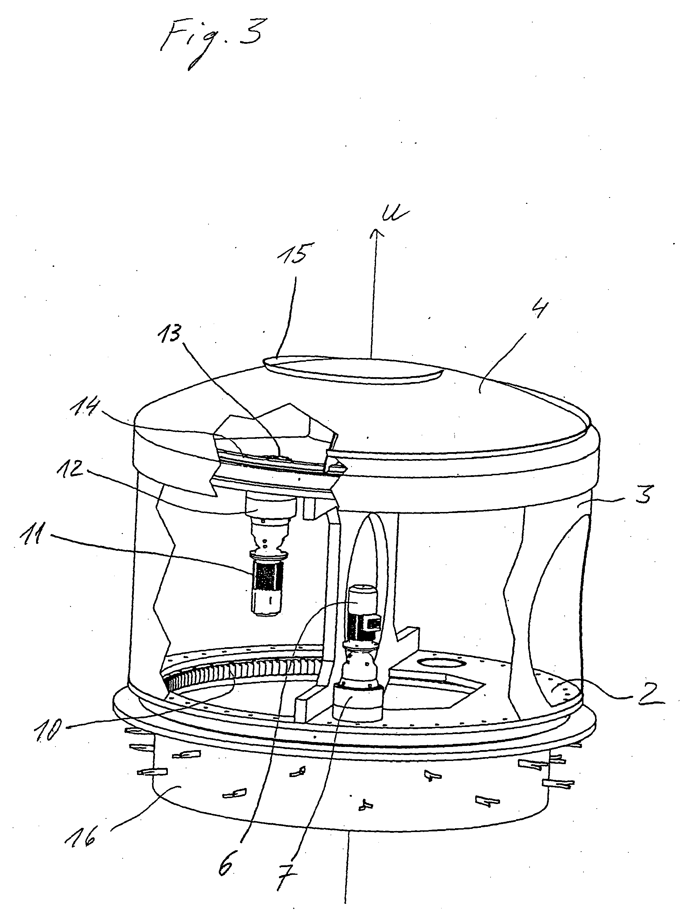

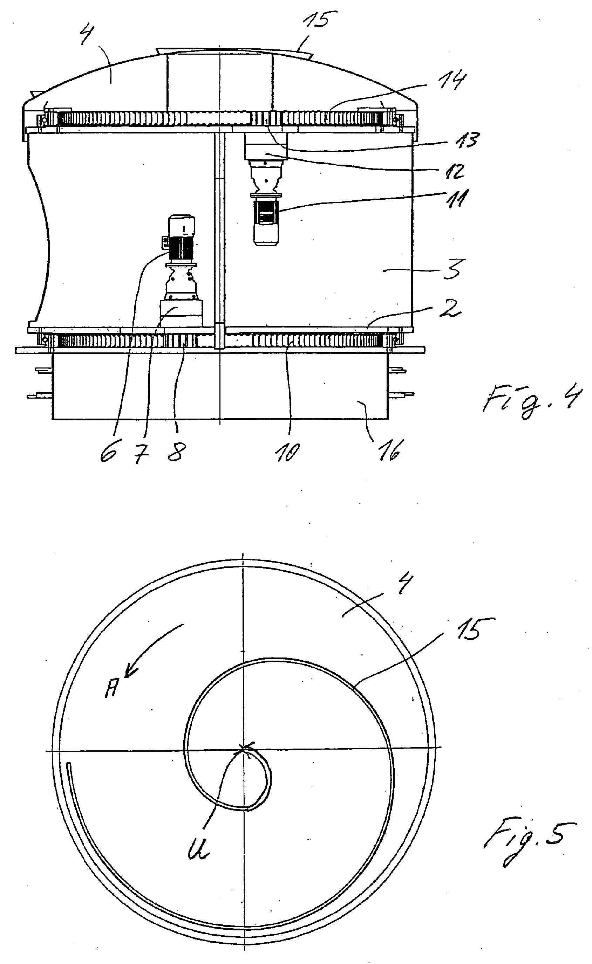

In Fig. 5, die das Dach 4 in einer Draufsicht zeigt, ist der spiralige Verlauf des die Effektoreinrichtung 15 bildenden Stegs 15 am besten zu erkennen. Der Steg 15 erstreckt sich von der Umlaufachse U aus spiralig um die Umlaufachse U bis zu einem äußeren Ende, das nahe bei dem äußeren Umfangsrand des Daches 4 gebildet ist. Die von dem Steg 15 gebildete Spirale erstreckt sich um die Umlaufachse U über einen Winkel von 540°. Sie ist überall gekrümmt. Ihr Krümmungsradius, gemessen auf die Umlaufachse U, nimmt von dem auf der Umlaufachse U liegenden inneren Ende des Stegs 15 bis zum äußeren Ende stetig zu. Der Spiralsteg 15 läuft an dem äußeren Ende tangential zu einem um die Umlaufachse U dort gedachten Kreis aus. Ein Pfeil A gibt die Drehrichtung an, die das Dach 4 im Betrieb relativ zu dem Gestell 16 aufweist.

## Patentansprüche

1. Vorrichtung zur Förderung von Schüttgut, umfassend:
a) eine Basis (2) mit einer Lagereinrichtung für eine Drehlagerung um eine Umlaufachse (U),
b) eine von der Basis (2) auskragende Fördereinrichtung (5), die wenigstens einen Querförderer (5) für eine Förderung des Schüttguts quer zu der Umlaufachse (U) oder wenigstens einen Zuförderer für eine Zuführung des Schüttguts zu einem derartigen Querförderer bildet,
c) ein Dach (4) für die Basis (2) und die Fördereinrichtung (5), das um die Umlaufachse (U) oder um eine zu der Umlaufachse (U) zumindest im Wesentlichen parallele Achse drehbar mit der Basis (2) verbunden ist,
d) und einen Antrieb (11, 12, 13, 14), mit dem das Dach (4) relativ zu der Basis (2) drehantreibbar ist.

2. Vorrichtung nach Anspruch 1, **dadurch gekennzeichnet, dass** der Antrieb (11, 12, 13, 14) die Basis (2) und das Dach (4) kinematisch miteinander koppelt und bei einem Drehantrieb des Dachs (4) ein Reaktionsmoment auf die Basis (2) überträgt.

3. Vorrichtung nach einem der vorhergehenden Ansprüche, **dadurch gekennzeichnet, dass** der Antrieb (11, 12, 13, 14) für das Dach (4) einen Motor (11) und ein Getriebe (12, 13, 14) mit einem von dem Motor (11) angetriebenen Antriebsrad (13) und einem von dem Antriebsrad (13) angetriebenen Abtriebsrad (14) umfasst, und dass der Motor (11) an einem aus Basis (2) und Dach (4) und das Abtriebsrad (14) an dem anderen abgestützt ist.

4. Vorrichtung nach dem vorhergehenden Anspruch, **dadurch gekennzeichnet, dass** das Antriebsrad (13) und das Abtriebsrad (14) miteinander in Wälzkontakt sind, wobei das Antriebsrad (13) an dem Abtriebsrad (14) vorzugsweise innen abwälzt und wobei das Getriebe (12, 13, 14) vorzugsweise ein Zahnradgetriebe ist oder umfasst.

5. Vorrichtung nach einem der zwei vorhergehenden Ansprüche, **dadurch gekennzeichnet, dass** der Motor (11) das Antriebsrad (13) über ein Untersetzungsgetriebe (12), das vorzugsweise wenigstens eine Umlaufgetriebestufe umfasst, antreibt.

6. Vorrichtung nach einem der drei vorhergehenden Ansprüche, **dadurch gekennzeichnet, dass** das Abtriebsrad (14) mit einem aus Basis (2) und Dach (4), vorzugsweise mit dem Dach (4), drehsteif verbunden ist, vorzugsweise daran befestigt ist.

7. Vorrichtung nach dem vorhergehenden Anspruch, **dadurch gekennzeichnet, dass** der Motor (11) mit dem anderen aus Basis (2) und Dach (4) drehsteif verbunden ist, vorzugsweise daran befestigt ist.

8. Vorrichtung nach einem der fünf vorhergehenden Ansprüche, **dadurch gekennzeichnet, dass** das Dach (4) sich über das Abtriebsrad (14) an der Basis (2) abstützt und das Abtriebsrad (14). Teil eines Drehlagers für das Dach (4), vorzugsweise ein Lagerring des Drehlagers, ist.

9. Vorrichtung nach einem der vorhergehenden Ansprüche, **dadurch gekennzeichnet, dass** für einen Drehantrieb der Basis (2) um die Umlaufachse (U) ein weiterer Antrieb (6, 7, 8, 9; 6, 7, 8, 10) vorgesehen und die Basis (2) mittels des weiteren Antriebs (6, 7, 8, 9; 6, 7, 8, 10) kinematisch mit einem Gestell (16) eines Schüttgutlagers gekoppelt oder koppelbar ist.

10. Vorrichtung nach dem vorhergehenden Anspruch, **dadurch gekennzeichnet, dass** der weitere Antrieb (6, 7, 8, 9; 6, 7, 8, 10) einen weiteren Motor (6) und ein weiteres Getriebe (7, 8, 9; 7, 8, 10) mit einem von dem weiteren Motor (6) angetriebenen weiteren Antriebsrad (8) und einem von dem weiteren Antriebsrad (8) angetriebenen weiteren Abtriebsrad (9; 10) umfasst und dass der weitere Motor (6) an einem aus Basis (2) und Gestell (16) und das weitere Abtriebsrad (9; 10) an dem anderen abgestützt ist.

11. Vorrichtung nach dem vorhergehenden Anspruch, **dadurch gekennzeichnet, dass** die Basis (2) sich über das weitere Abtriebsrad (9; 10) an dem Gestell (16) abstützt und das weitere Abtriebsrad (9; 10) Teil eines Drehlagers für die Basis (2), vorzugsweise ein Lagerring des Drehlagers ist.

12. Vorrichtung nach einem der zwei vorhergehenden Ansprüche, **dadurch gekennzeichnet, dass** der weitere Motor (6) mit dem einen aus Basis (2) und Gestell (16) drehsteif verbunden ist, vorzugsweise daran befestigt ist.

13. Vorrichtung nach einem der vorhergehenden Ansprüche, **dadurch gekennzeichnet, dass** auf dem Dach (4) eine Effektoreinrichtung (15) angeordnet ist, die von dem Schüttgut gebildete Brücken zerstört.

14. Vorrichtung nach dem vorhergehenden Anspruch, **dadurch gekennzeichnet, dass** die Effektoreinrichtung (15) wenigstens ein auf dem Dach (4) befestigtes, relativ zu dem Dach (4) nicht angetriebenes passives Effektorelement umfasst.

15. Vorrichtung nach einem der zwei vorhergehenden Ansprüche, **dadurch gekennzeichnet, dass** die Effektoreinrichtung (15) oder ein Teil der Effektoreinrichtung auf dem Dach (4) um die Umlaufachse (U) spiralig gebildet ist.

16. Vorrichtung nach einem der drei vorhergehenden Ansprüche, **dadurch gekennzeichnet, dass** von dem Dach (4) aufragende Reißzähne die Effektoreinrichtung oder einen Teil der Effektoreinrichtung bilden.

17. Vorrichtung nach einem der vier vorhergehenden Ansprüche, **dadurch gekennzeichnet, dass** die Effektoreinrichtung wenigstens ein relativ zu dem Dach angetriebenes, aktives Effektorelement umfasst, das vorzugsweise eine drehangetriebene Schnecke, eine drehangetriebene Sichel, ein translatorisch angetriebener Aufreißer oder ein translatorisch angetriebenes Messer ist.

18. Schüttgutlager umfassend:
a) einen Lagerbehälter (1) für Schüttgut,
b) eine Vorrichtung nach einem der vorhergehenden Ansprüche, die in dem Lagerbehälter (1) mit der Basis (2) um die Umlaufachse (U) drehbar für einen Austrag des Schüttguts von unten angeordnet ist.

19. Verfahren zur Förderung von Schüttgut, das in einem Lagerbehälter (1) gelagert wird, in dem eine Vorrichtung nach einem der vorhergehenden Ansprüche mit der Basis (2) um die Umlaufachse (U) drehbar so angeordnet ist, dass eine Schüttgutsäule auf der Vorrichtung lastet, wobei die Fördereinrichtung (5) das Schüttgut in eine Richtung quer zu der Umlaufachse (U) oder zu einem das Schüttgut quer zu der Umlaufachse (U) fördernden Querförderer fördert und während der Förderung um die Umlaufachse (U) umläuft, und dass das Dach (4) relativ zu der Basis (2) und der Schüttgutsäule drehangetrieben wird.

20. Verfahren nach dem vorhergehenden Anspruch, **dadurch gekennzeichnet, dass** ein Motor (11) das Dach (4) relativ zu der Basis (2) und ein weiterer Motor (6) die Basis (2) relativ zu dem Lagerbehälter (1) drehantreibt und die Motoren (6, 11) je drehmomentgeregelt werden, vorzugsweise je auf Einhaltung eines während eines Abtrags der Schüttgutsäule unveränderlichen Drehmoments.

21. Verfahren nach einem der zwei vorhergehenden Ansprüche, **dadurch gekennzeichnet, dass** ein Motor (11) das Dach (4) relativ zu der Basis (2) in eine Drehrichtung und ein weiterer Motor (6) die Basis (2) relativ zu dem Lagerbehälter (1) in die Gegendrehrichtung antreibt.
